# EUROPÄISCHE PATENTSCHRIFT

(11) **EP 4 039 449 B1**
(45) Veröffentlichungstag und Bekanntmachung des Hinweises auf die Patenterteilung: **29.10.2025**
(21) Anmeldenummer: 21155532.1
(22) Anmeldetag: 05.02.2021
(51) Int. Cl.: B29C 64/118, B29C 64/209, B29C 64/393, B33Y 30/00, B33Y 50/02

(54) **3D-DRUCKER UND VERFAHREN ZUM 3D-DRUCKEN**
3D PRINTER AND METHOD FOR 3D PRINTING
IMPRIMANTE 3D ET PROCÉDÉ D'IMPRESSION 3D

(43) Veröffentlichungstag der Anmeldung: 10.08.2022
(73) Patentinhaber: TRACK3D GmbH, 10623 Berlin (DE)
(72) Erfinder: Braden, Bent, 10589 Berlin (DE)
(74) Vertreter: Pfenning, Meinig & Partner mbB

(56) Entgegenhaltungen:
- EP-A1- 3 742 245
- WO-A1-2018/191728
- GB-A- 2 538 522
- JP-A- 2020 138 535
- US-A1- 2016 023 403
- US-A1- 2020 001 540

## Beschreibung

Die vorliegende Anmeldung liegt auf dem Gebiet der additiven Fertigungstechnik. Die Anmeldung betrifft einen 3D-Drucker und ein Verfahren zum 3D-Drucken.

Im Allgemeinen sind 3D-Drucker Fertigungsgeräte, die Material Schicht für Schicht auftragen und so dreidimensionale Bauteile (Werkstücke) erzeugen. Das Schmelzschichtungsverfahren (engl. Fused Deposition Modeling (FDM) oder Fused Filament Fabrication (FFF)) ist ein 3D-Druckverfahren, bei dem ein Endlosfilament aus einem thermoplastischen Material verwendet wird. Das Filament wird beispielsweise von einer großen Spule durch einen beweglichen, beheizten Druckkopf zugeführt und auf das wachsende Bauteil aufgebracht. Der Druckkopf wird unter Computersteuerung bewegt, um die gedruckte Form zu erzeugen. Stand der Technik verwandter Art ist beispielsweise in der Druckschrift DE102014221991A1 beschrieben. Weiterhin kann das sogenannte Fused Granulate Modeling (FGM) Verfahren verwendet werden, in welchem statt der Filamente direkt die Granulate in einem additiven Druckprozess eingebracht werden.

Aus EP 3 742 245 A1 ist ein 3D-Drucker bekannt, bei dem sich ein Profilometer mit dem Druckkopf bewegt und die Ist-Geometrie eines zu druckenden Bauteils erfasst und ein Kontrollsystem auf Basis der erfassten Daten die Druckparameter korrigiert. Aus US 2020/0001540 A1 ist weiterhin ein System bekannt, in dem der Druck auf Basis der erfassten Daten von mindestens einem optischen Sensor und einer Vorrichtung zur Verfolgung der gedruckten Oberfläche kontrolliert wird. JP 2020 138535 A beschreibt ein weiteres System zum 3D-Druck, in dem die Ist-Geometrie des Bauteils optisch erfasst wird und Lücken senkrecht zur Druckrichtung durch das Ablegen einer Korrekturschmelze geschlossen werden. GB 2 538 522 A beschreibt außerdem ein Verfahren sowie eine Vorrichtung zum Druck von mehrschichtigen elektronischen Schaltkreisen oder Komponenten, wobei eine Überwachung des Drucks optisch erfolgt.

Nachteilig bei vielen aus dem Stand der Technik bekannten 3D-Druckern ist, dass durch Kalibrierungsfehler der Computersteuerung des Druckkopfes periodische Fehlstellen in einem zu druckenden Bauteil auftreten können. Zudem können statistische Fluktuationen eines Massestromes durch den Druckkopf sowie statistische Fluktuationen einer Verfahrgeschwindigkeit des Druckkopfes zu Fehlstellen und Inhomogenitäten in dem zu druckenden Bauteil führen.

Der vorliegenden Erfindung liegt dementsprechend die Aufgabe zugrunde, einen verbesserten 3D-Drucker vorzuschlagen. Insbesondere ist es eine Aufgabe der vorliegenden Erfindung, einen 3D-Drucker vorzuschlagen, welcher in besonders einfacher Weise eine Qualität des hergestellten Bauteils erhöht und dadurch Ressourcen schont und Kosten verringert. Es ist zudem eine Aufgabe ein entsprechend vorteilhaftes Verfahren zum 3D-Drucken vorzuschlagen.

Diese Aufgaben werden gelöst durch einen 3D-Drucker mit den Merkmalen des Anspruchs 1 sowie durch ein Verfahren zum 3D-Drucken mit den Merkmalen eines weiteren Anspruchs. Weiterbildungen ergeben sich mit den Merkmalen der abhängigen Ansprüche und der Ausführungsbeispiele.

Der vorgeschlagene 3D-Drucker weist einen Druckkopf und eine Steuereinheit auf. Die Steuereinheit ist eingerichtet eine Position des Druckkopfes relativ zu einem zu druckenden Bauteil und/oder einen Massestrom durch den Drucckopf einzustellen. Der 3D-Drucker weist außerdem einen optischen Sensor, der eingerichtet ist, eine Ist-Geometrie des zu druckenden Bauteiles zu bestimmen, und eine Korrektureinheit auf. Die Korrektureinheit ist eingerichtet, die Ist-Geometrie zu empfangen, die Ist-Geometrie zum Bestimmen einer Korrekturinformation mit einer Soll-Geometrie zu vergleichen und die Korrekturinformation so an die Steuereinheit auszugeben, dass die Steuereinheit die Position des Druckkopfes relativ zu dem zu druckenden Bauteil und/oder den Massestrom durch den Druckkopf auf Basis der Korrekturinformation steuert. Die Steuereinheit umfasst typischerweise Schrittmotoren und/oder Servomotoren und/oder elektronische Komponenten, wie beispielsweise Encoder, Datenverarbeitungssysteme, insbesondere einen Industrie-Computer und/oder Industrie-Steuerung und/oder einen Schaltschrank und Achssysteme. Zusätzlich kann eine Fördereinheit vorgesehen sein aufweisend einen Schrittmotor und/oder Servomotor, eine Förderschnecke und/oder ein Förderrad sowie Heizelemente. Weiterhin können ein oder mehrere Faltenbälge und/oder elastische Dichtungen vorgesehen sein, um einzelne Komponenten, insbesondere elektronische Komponenten und/oder Achsen zu umhüllen.

Indem der 3D-Drucker einen optischen Sensor und eine Korrektureinheit aufweist, können Fehlstellen und/oder Inhomogenitäten erkannt und diese während eines späteren Schritts im aktuellen Druckprozess ausgebessert werden. Insbesondere können bereits nach dem Drucken von kleinen Teilabschnitten Fehlstellen und/oder Inhomogenitäten ausgebessert werden. Zudem können Kalibrierungsfehler während des Druckprozesses erkannt und diese in einem späteren Schritt im aktuellen Druckprozess unterdrückt werden. Dadurch kann auf besonders einfache Weise die Qualität des gefertigten Bauteils erhöht, der Bauteilausschuss reduziert und damit Ressourcen eingespart und Kosten gesenkt werden. Der Druckkopf kann mindestens eine Düse, insbesondere zwei Düsen, einen Materialbunker, einen Thermoschild und/oder die Fördereinheit aufweisen.

Die vorliegende Anmeldung bezieht sich auch auf ein entsprechend vorteilhaftes Verfahren, bei dem beispielsweise ein wie unten oder oben beschriebener 3D-Drucker verwendet werden kann. Bei diesem Verfahren wird eine Ist-Geometrie eines zu druckenden Bauteiles bestimmt. Anschließend wird eine Korrekturinformation auf Basis eines Vergleiches der Ist-Geometrie mit einer Soll-Geometrie des zu druckenden Bauteiles bestimmt. Beispielsweise kann für den Vergleich ein, insbesondere auf einer Slicer-Software basierender, G-Code verwendet werden. In einem weiteren Schritt wird ein Druckkopf relativ zu dem zu druckenden Bauteil auf Basis der Korrekturinformation positioniert und/oder ein Massestrom durch den Druckkopf auf Basis der Korrekturinformation gesteuert.

Der optische Sensor kann mit dem Druckkopf derart verbunden sein, dass der optische Sensor eine Bewegung entsprechend derjenigen des Druckkopfes ausführt. In einigen Ausführungen ist der Druckkopf starr mit dem optischen Sensor verbunden. Der Druckkopf und der optische Sensor können so miteinander verbunden sein, dass diese stets gemeinsam relativ zu dem zu druckenden Bauteil verschiebbar sind. Dies schließt auch eine Ausführung ein, bei der das Bauteil verschiebbar und der Druckkopf und der optische Sensor fest gegenüber einem äußeren Gehäuse verbaut sind. Auf diese Weise ist eine, insbesondere vollständige, Rasterung des Bauteils während des Druckprozesses möglich, ohne dass weitere Steuereinheiten und/oder Steuerelemente benötigt werden. Insbesondere können der optische Sensor und der Drucckopf derselben Baugruppe des 3D-Druckers, insbesondere einer Hot-End-Baugruppe, angehören.

In weiteren Ausführungen ist die Korrektureinheit eingerichtet, während einer Herstellung des Bauteils selbsttätig mehrfach weitere Korrekturinformationen zu bestimmen und so an die Steuereinheit auszugeben, dass die Steuereinheit die Position des Druckkopfes relativ zu dem zu druckenden Bauteil und/oder den Massestrom durch den Druckkopf auf Basis der weiteren Korrekturinformationen steuert. Auf diese Weise kann ein regelmäßiger Vergleich zwischen der Ist-Geometrie und der Soll-Geometrie des zu bedruckenden Bauteils erreicht werden, um regelmäßig Korrekturinformationen an die Steuereinheit zu senden. Dadurch kann die Qualität des gefertigten Bauteils, auf Basis einer schnellen Unterdrückung und/oder Ausbesserung von Fehlstellen und/oder Inhomogenitäten und/oder Kalibrationsfehlern, erhöht werden. Es kann vorgesehen sein, dass der optische Sensor kontinuierlich die Ist-Geometrie des zu druckenden Bauteils erfasst. In weiteren Ausführungen erfasst der optische Sensor die Ist-Geometrie nicht kontinuierlich sondern zu diskreten Zeitpunkten. Hierdurch kann in vorteilhafter Weise eine kontinuierliche Fehlerbehebung und automatische Prozess-Kalibrierung erreicht werden.

In einigen Ausführungen ist der optische Sensor ein Lasersensor. Aufgrund einer typischerweise gut definierten Kohärenzlänge und die damit verbundene wohl definierte Strahldivergenz des Lasers kann ein Lasersensor die Ist-Geometrie genau bestimmen. Durch das vom Laser in der Regel emittierte monochromatische Licht kann eine wellenlängenabhängige Streuung an der Oberfläche des Bauteils, welche die Bestimmung der Ist-Geometrie verfälschen würde, vermieden werden. Eine Wellenlänge des Lasersensors ist in der Regel so ausgewählt, dass das Bauelement einen ausreichend hohen Reflektivitätskoeffizienten besitzt.

In anderen Ausführungen ist der optische Sensor ein Leuchtdiodensensor. Es kann vorgesehen sein, dass der optische Sensor, insbesondere Leuchtdiodensensor, strukturiertes Licht verwendet. In weiteren Ausführungsformen ist der optische Sensor ein Sensor, der zur Streifenprojektion eingerichtet ist. In weiteren Ausführungen kann ein Snapshot-Sensor verwendet werden. Der Einsatz eines optischen Sensors mit Streifenprojektion ermöglicht eine hohe Genauigkeit. Es ist vorteilhaft einen optischen Sensor, insbesondere Leuchtdioden, im blauen Spektralbereich zu verwenden und/oder mit schnellen Messzyklen von bis zu 5 Hz. Aufgrund einer großen Strahldivergenz kann eine große Fläche mit einer Aufnahme vermessen werden.

In weiteren Ausführungen ist der optische Sensor ein Linienprofilsensor. Auf diese Weise können Fehlstellen sowohl in einer Druckebene als auch senkrecht zu der Druckebene in ihrer Größe vermessen werden. Der Linienprofilsensor ist in der Regel eingerichtet eine Linie, insbesondere eine ungekrümmte Linie, auszuleuchten. Die Linie des Linienprofilsensors kann entweder senkrecht zu einer X- oder einer Y-Achse eines 2D-Fächenportals, das den Druckkopf verfährt, ausgerichtet sein. Dadurch kann ein durch den Sensor erfasstes Höhenprofil einfach Drehgeberwerten bzw. der Ist-Position einer Achse zugeordnet werden. In anderen Ausführungsformen ist die Ausrichtung der Linie des Linienprofilsensors variabel, sodass während des Druckprozesses die Linie des Linienprofilsensors in Abhängigkeit von der zu vermessenden Fehlstelle eingestellt werden kann. Es kann vorhergesehen sein, dass der Linienprofilsensor als Laserlinienprofilsensor ausgebildet ist. Eine typische Fernmessbreite einer Laserlinie des Laserlinienprofilsensors beträgt typischerweise mindestens 1 mm und/oder höchstens 10 cm.

In vorteilhaften Ausführungsformen ist der optische Sensor möglichst nah, insbesondere in einem Abstand von maximal 20 cm, insbesondere maximal 10 cm, an der Düse zu positionieren. Je näher sich der Sensor an der Düse befindet, desto mehr stimmen mögliche Verfahrwege des Druckkopfes mit denen des optischen Sensors überein. Ein minimaler Abstand zwischen der Düse und dem optischen Sensor ist durch eine Abwärme des Druckkopfes und eine maximale Betriebstemperatur des optischen Sensors gegeben. Ein geeigneter Abstand des Sensors zu der Druckebene hängt von Eigenschaften, wie beispielsweise einer Strahlbreite, des optischen Sensors ab. Eine Rasterung der Ist-Geometrie erfolgt vorzugsweise in mehreren Teilabschnitten während oder nach dem Druckprozess einer Schicht, insbesondere nachdem eine gesamte Schicht abgelegt wurde. Erfolgt eine Rasterung in Teilabschnitten, kann der Druckprozess hierfür pausiert werden. Es kann vorgesehen sein, dass der Druckkopf und der Sensor in einer Höhe und ein Hubtisch, auf dem das Bauteil angeordnet wird, in der Druckebene verfahrbar sind oder dass der Druckkopf und der Sensor starr sind und der Hubtisch sowohl in der Höhe als auch in der Druckebene verfahrbar ist. Eine weitere Ausführung sieht eine Rotierbarkeit des optischen Sensors um die Düse vor. Hierbei kann der Sensor kollinear mit einem aktuellen Richtungsvektor der Düse ausgerichtet werden. Eine Laserlinie kann orthogonal zum Richtungsvektor ausgerichtet sein. Mit dieser Anordnung ist es möglich kontinuierlich während des Druckes die aktuelle Ist-Geometrie besonders genau zu erfassen.

Typischerweise ist der 3D-Drucker eingerichtet einen Schmelzschichtungsdruckprozess, insbesondere einen FDM- bzw. FFF- Schmelzschichtungsdruckprozess, durchzuführen. Es kann insbesondere vorgesehen sein, dass bei dem Druckprozess ein Endlosfilament aus einem thermoplastischen Material verwendet wird. Durch die vergleichsweise geringen Anschaffungs- und Betriebskosten, die mit dem Schmelzschichtungsdruckprozess einher gehen, sowie die geringe räumliche Ausdehnung von optischen Sensoren lässt sich die vorliegende Erfindung in einen 3D-Drucker, welcher eingerichtet ist einen Schmelzschichtungsdruckprozess durchzuführen, vorteilhaft integrieren. Die Erfindung kann jedoch prinzipiell auch in 3D-Druckern integriert werden, welche eingerichtet sind andere Druckverfahren, wie beispielsweise Multi Jet Fusion (MJF), selektivem Laserintern (SLS), Stereolithografie (SLA), Polygrafie, selektives Laserschmelzen (SLM), durchzuführen. Insbesondere kann die Erfindung auch in einem 3D-Drucker vorgesehen werden, welcher eingerichtet ist ein Granulat als Ausgangsmaterial zu verwenden. Insbesondere kann der 3D-Drucker zur Anwendung des Fused Granulate Modeling (FGM)-Verfahrens eingerichtet sein.

In einigen Ausführungen ist die Korrektureinheit eingerichtet anhand des Vergleichs der Ist-Geometrie mit der Soll-Geometrie einen Kalibrationsfehler zu erkennen. Die Korrektureinheit kann eingerichtet sein, den Kalibrationsfehler bei der Bestimmung der Korrekturinformation zu berücksichtigen. Hierbei kann die Korrektureinheit eingerichtet sein die Korrekturinformation an die Steuereinheit so auszugeben, dass die Steuereinheit die Position des Drucckopfes relativ zu dem zu druckenden Bauteil und/oder den Massestrom durch den Druckkopf auf Basis der Korrekturinformation derart anpasst, dass der Kalibrationsfehler in einem späteren Schritt im aktuellen Druckprozess vermieden wird. Kalibrationsfehler äußern sich in der Regel durch periodische Fehlstellen, insbesondere Abstände, die Lücken oder Spalten im Bauteil verursachen, oder Erhöhungen zwischen Schmelzsträngen. Durch eine 3D-Vermessung, auf Basis des optischen Sensors, kann der Abstand zwischen den Strängen bestimmt werden und es kann eine automatische Kalibrierung des Druckprozesses derart stattfinden, dass in einem späteren Schritt im aktuellen Druckprozess der Abstand zwischen den Strängen optimiert, insbesondere angepasst wird, an einen Soll-Abstand zwischen den Schmelzsträngen, sodass die Kalibrationsfehler vermieden werden. Auf diese Weise kann die Anzahl und Größe von Fehlstellen des hergestellten Bauteils minimiert werden.

In weiteren Ausführungen enthalten die Korrekturinformationen Informationen zu Korrekturvolumina, um Abweichungen zwischen der Soll- und Ist-Geometrie abhängig von den Korrekturvolumina durch Ablegen einer Korrekturschmelze zu beheben. Auf Basis des optischen Sensors können Fehlstellen, insbesondere Lücken, Spalten oder Erhöhungen, zwischen den Schmelzsträngen in ihrer Größe vermessen werden. Aus einer Größe der Fehlstellen können Korrekturvolumina bestimmt werden. Anschließend kann eine zu den Korrekturvolumina passende Korrekturschmelze bestimmt werden, sodass die Fehlstellen in einem späteren Schritt im aktuellen Druckprozess behoben werden können. Auf diese Weise kann die Qualität des hergestellten Bauteils durch Behebung der Fehlstellen erhöht werden. Beim Beheben der Abweichungen zwischen der Soll- und Ist-Geometrie können insbesondere die als Lücken oder Spalten vorliegenden Fehlstellen gefüllt werden.

In einigen Ausführungen fungieren beim Beheben der Abweichungen zwischen der Soll- und Ist-Geometrie zuvor abgelegte Schmelzstränge als Abdichtung einer Düsenöffnung. Dadurch kann eine zuverlässige Korrektur insbesondere dann erreicht werden, wenn die Größe der Fehlstellen, insbesondere die Größe der Lücken oder Spalten, kleiner als der Durchmesser der Düsenöffnung des Druckkopfes ist. In dieser Ausführung kann es vorgesehen sein, dass die Steuereinheit so angesteuert wird, dass der Druckkopf beim Beheben der Abweichungen die zuvor abgelegten Schmelzstränge zum Abdichten der Düsenöffnung berührt oder nahezu berührt, während die Lücken oder Spalten zum Beheben der Abweichungen zwischen der Soll- und Ist-Geometrie gefüllt werden.

In weiteren Ausführungsformen werden die Abweichungen zwischen der Soll- und Ist-Geometrie derart behoben, dass Lücken mit inhomogener Breite in Richtung senkrecht zu der Druckrichtung mit der Korrekturschmelze gefüllt werden. Die Lücken mit inhomogener Breite in Richtung senkrecht zu der Druckrichtung können mit der Korrekturschmelze gefüllt werden, indem die Steuereinheit die Position des Druckkopfes relativ zu dem zu druckenden Bauteil, insbesondere eine Verfahrgeschwindigkeit des Druckkopfes, und/oder den Massestrom durch den Druckkopf abhängig von der Breite steuert. Lücken, insbesondere Spalten, zwischen Schmelzsträngen, mit inhomogener Breite in Richtung senkrecht zu der Druckrichtung können durch einen inhomogenen Massestrom durch den Druckkopf verursacht werden.

Zudem kann die Korrektureinheit eingerichtet sein anhand eines Vergleiches der Ist- und Soll-Geometrie und/oder eines Vergleiches der Ist-Geometrie zu mindestens zwei verschiedenen Zeitpunkten Informationen über eine Materialschrumpfung nach dem Abkühlen der Schmelze zu bestimmen. Dabei enthalten die Korrekturinformation die Informationen über die Materialschrumpfung und werden so an die Steuereinheit ausgegeben, dass die Steuereinheit die Position des Druckkopfes relativ zu dem zu druckenden Bauteil und/oder den Massestrom durch den Druckkopf auf Basis der Korrekturinformation steuert. Durch die Berücksichtigung der Materialschrumpfungen kann die Qualität des hergestellten Bauteils weiter verbessert werden. Die Materialschrumpfung nach dem Abkühlen der Schmelze führt typischerweise zu Lücken, insbesondere Spalten zwischen Schmelzsträngen und/oder anderen Abweichungen von der Ist-Geometrie. Auf diese Weise kann die Anzahl und Größe von Fehlstellen basierend auf der Materialschrumpfung des hergestellten Bauteils minimiert werden.

Erfindungsemäß ist der optische Sensor von einem Bauraum, der zur Aufnahme des zu druckenden Bauteils vorgesehen ist, durch eine optisch transparente Scheibe getrennt. Auf diese Weise kann eine Degradation, z.B. verursacht durch Erwärmung und/oder Belegung des optischen Sensors, reduziert werden.

Zusätzlich berücksichtigt erfindungsgemäß die Korrektureinheit bei der Bestimmung der Korrekturinformation einen Brechungsindex der optisch transparenten Scheibe. Dadurch können Verfälschungen der Ist-Geometrie vermieden werden, sodass eine Lichtbrechung an der optisch transparenten Scheibe die Bestimmung der Ist-Geometrie nicht beeinflusst.

Es kann beispielsweise vorgesehen sein, dass der optische Sensor ein Lasersensor mit einer Halbleiterlaserdiode ist, die bei einer Wellenlänge im sichtbaren oder infraroten Spektralbereich arbeitet. Die kompakte Bauweise sowie die lange Lebenszeit von Halbleiterdioden sind vorteilhaft für die Integration in den optischen Sensor. Eine Wellenlänge im infraroten Spektralbereich ermöglicht eine genaue Bestimmung der Ist-Geometrie im µm bis cm Bereich ohne zu stark von der Oberflächenrauheit, welche die Bestimmung der Ist-Geometrie verfälschen würde, abhängig zu sein.

In einigen Ausführungen verwendet die Kontrolleinheit ein, beispielsweise auf einer Slicer-Software basierenden, G-Code für den Abgleich zwischen der Ist- und Soll-Geometrie. Der 3D-Drucker kann ferner Temperatursensoren, insbesondere zum Erfassen einer Schmelztemperatur in Düsen, einer Druckbetttemperatur und/oder einer Bauraumtemperatur, aufweisen. Die Temperatursensoren können als Widerstandstemperatursensoren, beispielsweise PT100 Sensoren, ausgeführt sein. Eine Ist-Position des Druckkopfes kann beispielsweise durch einen Encoder bestimmt werden.

In einigen vorteilhaften Ausführungsformen, ist die Kontrolleinheit eingerichtet speicherprogrammierbar zu sein. Auf diese Weise kann ein elektronisches 3D-Volumenmodell des Bauteils visualisiert und abgespeichert werden. Darüber hinaus kann auf diese Weise der 3D-Druckprozess visualisiert und abgespeichert werden. Es kann beispielsweise vorgesehen sein, dass der 3D-Drucker eingerichtet ist, basierend auf einer wiederholten Bestimmung der Ist-Geometrie ein Protokoll zu erzeugen. In dieser Ausführung ist es beispielsweise möglich nach dem 3D-Druckprozess qualifizierte Aussagen zu einem Bauteilinneren zu treffen, was Vorteile für die Analyse des Bauteils und des Verständnisses des Druckprozesses mit sich bringen kann. Hierbei kann es auch vorgesehen sein, dass der 3D-Drucker nicht notwendigerweise eine Korrektureinheit aufweist. Es ist in diesem Fall auch nicht unbedingt nötig, dass die Korrekturinformation bestimmt und der Druckkopf auf Basis dieser positioniert wird. Zur Bestimmung der Ist-Geometrie sollte aber der optische Sensor, wie oben oder unten beschrieben, vorgesehen sein.

Oben oder unten in Bezug auf den 3D-Drucker genannte Merkmale sind entsprechend auf das Verfahren zum 3D-Drucken anwendbar und umgekehrt.

Ausführungsbeispiele der Erfindung werden nachfolgend anhand der Figuren erläutert. Dabei zeigen, jeweils schematisch,
- Fig. 1: eine Querschnittsansicht eines 3D-Druckers mit einem optischen Sensor,
- Fig. 2: eine Querschnittsansicht eines 3D-Druckers mit einem optischen Sensor, wobei das zu druckende Bauteil einen fehlerhaften Abstand zwischen den Schmelzsträngen aufweist,
- Fig. 3: eine perspektivische Ansicht des zu druckenden Bauteils mit fehlerhaften Abstand zwischen den Schmelzsträngen,
- Fig. 4: eine Querschnittsansicht eines 3D-Druckers mit einem optischen Sensor zur Fehlerkorrektur,
- Fig. 5: eine perspektivische Ansicht des zu druckenden Bauteils mit Fehlerkorrektur,
- Fig. 6: eine perspektivische Ansicht des zu druckenden Bauteils mit Fehlerkorrektur eines inhomogenen Schmelzstranges,
- Fig. 7: eine perspektivische Ansicht des zu druckenden Bauteils mit einem erhöhten Massestrom,
- Fig. 8: eine perspektivische Ansicht des zu druckenden Bauteils mit einer Formabweichung,
- Fig. 9: eine perspektivische Ansicht während eines Rasterns eines defekten herkömmlich gefertigten Bauteils,
- Fig. 10: eine perspektivische Ansicht eines herkömmlich gefertigten Bauteils mit anschließender Fehlerkorrektur,
- Fig. 11: eine perspektivische Ansicht einer Baugruppe des 3D-Druckers und
- Fig. 12: eine weitere perspektivische Ansicht der Baugruppe.

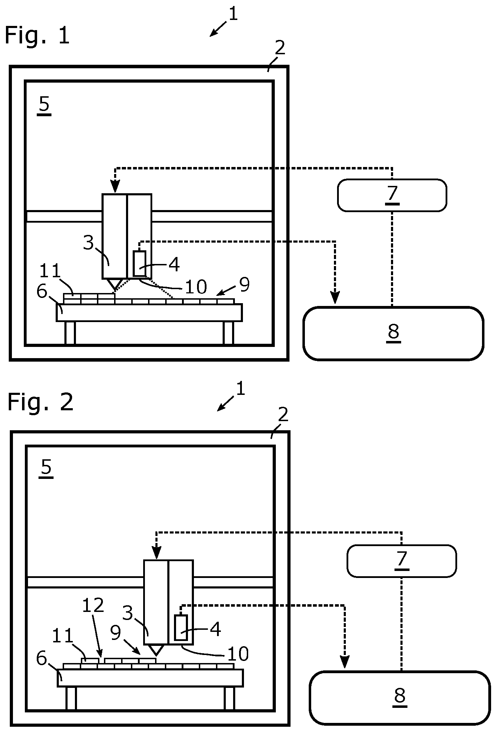

Die Fig. 1 zeigt einen 3D-Drucker 1 im Querschnitt, welcher eingerichtet ist einen Schmelzschichtungsdruckprozess durchzuführen, bei dem ein Endlosfilament aus einem thermoplastischen Material verwendet wird, insbesondere in einem FFF-Verfahren, oder eingerichtet ist ein Granulat-basierendes Schmelzschichtverfahren durchzuführen. Der 3D-Drucker 1 weist ein Gehäuse 2 auf, mindestens einen Druckkopf 3, einen optischen Sensor 4, einen Bauraum 5, einen Hubtisch 6, eine Steuereinheit 7 und eine Korrektureinheit 8. Der optische Sensor 4 kann beispielsweise einen oder mehrere Snapshot-Sensoren und/oder Laser-Sensoren und/oder Linienprofilsensoren beinhalten und ist mit dem Druckkopf 3 starr verbunden. Es kann vorgesehen sein, dass der Lasersensor eine Halbleiterlaserdiode mit einer Wellenlänge im infraroten Spektralbereich umfasst. In anderen Ausführungsformen können Halbleiterlaserdioden im sichtbaren Spektralbereich vorgesehen werden.

Die Steuereinheit 7 ist eingerichtet eine Position des Druckkopfes relativ zu dem zu druckenden Bauteil 9 und/oder einen Massestrom durch den Drucckopf 3 einzustellen. Der optische Sensor 4 erfasst die Ist-Geometrie des zu druckenden Bauteiles 9, insbesondere die Ist-Geometrie der Oberfläche des zu druckenden Bauteiles 9 und sendet Ist-Geometrie-Informationen an die Korrektureinheit 8. Die Korrektureinheit 8 ist eingerichtet die Ist-Geometrie-Informationen zu empfangen und Korrekturinformationen auf Basis eines Abgleiches zwischen der Information der Ist-Geometrie und der Soll-Geometrie zu bestimmen. Der optische Sensor 4 ist von dem Bauraum 5, der zur Aufnahme des zu druckenden Bauteils 9 vorgesehen ist, durch eine optisch transparente Scheibe 10 getrennt. Es kann vorgesehen sein, dass die optisch transparente Scheibe 10 aus Glas, insbesondere Quarzglas, besteht. Ein Brechungsindex der optisch transparenten Scheibe 10 wird von der Korrektureinheit 8 derart berücksichtigt, dass der optische Sensor 4 die Ist-Geometrie unverfälscht widerspiegelt. Die Steuereinheit 7 ist in dieser und der folgenden Beschreibung symbolhaft außerhalb des 3D-Druckers positioniert. Sie bildet jedoch eine Gruppe aus verschiedenen Hard- und Software-Komponenten, wie beispielsweise einen Schaltschrank, Industrierechner, Industriesteuerung, Schritt- oder Servo-Motoren, Encodern und Achssystemen. Diese können sich an unterschiedlichen Positionen im und außerhalb des 3D-Druckers befinden, sind hier jedoch symbolhaft an einer Position zusammengefasst.

Die Korrektureinheit 8 kann beispielsweise ein Computer, ein Desktop-PC, Notebook-PC oder Smartphone, insbesondere jede Art von Datenverarbeitungssystem umfassen. Die Verbindung der Korrektureinheit 8 zur Steuereinheit 7 und/oder dem optischen Sensor 4 kann kabelgebunden und/oder kabelungebunden erfolgen. Die Korrekturinformationen werden durch die Korrektureinheit 8 derart an die Steuereinheit 7 ausgegeben, dass die Steuereinheit 7 die Position des Druckkopfes 3 relativ zu dem zu druckenden Bauteil 9 und/oder den Massestrom durch den Druckkopf 3 auf Basis der Korrekturinformation steuert. Die Korrektureinheit 8 bestimmt während einer Herstellung des Bauteils 9 selbsttätig und mehrfach weitere Korrekturinformationen und gibt sie an die Steuereinheit 7 weiter, sodass die Steuereinheit 7 die Position des Druckkopfes 3 relativ zu dem zu druckenden Bauteil 9 und/oder den Massestrom durch den Druckkopf 3 auf Basis der weiteren Korrekturinformationen steuert. Zusätzlich zeigt Fig. 1, durch den Druckkopf 3, ideal abgelegte Schmelzstränge 11.

Fig. 2 zeigt einen laufenden Druckprozess. Wiederkehrende Merkmale sind in dieser und in den weiteren Abbildungen mit den gleichen Bezugszeichen versehen. Bei der oberen Schicht ist der Abstand zwischen den abgelegten Schmelzsträngen 11 zu groß, eine deutliche Lücke 12 ist zu erkennen. Dies ist ein Kalibrierungsfehler. Durch die Vermessung auf Basis des optischen Sensors 4 kann der Abstand zwischen den Schmelzsträngen 11 bestimmt werden und es kann eine automatische Kalibrierung stattfinden. So hängt der Abstand zwischen den Schmelzsträngen 11 von der Positionierung und von der Breite der Schmelzstränge 11 ab. Die Breite der Schmelzstränge 11 hängt vom Massestrom durch den Druckkopf 3 und der Verfahrgeschwindigkeit des Drucckopfes 3 ab. Im Idealfall entspricht die Schmelzstrangbreite dem Durchmesser der Düsenöffnung 28. Bei vom Idealfall abweichenden Massenstrom können Inhomogenitäten oder Abweichungen von der gewünschten Breite auftreten. Eine automatische Kalibrierung auf Basis des optischen Sensors 4, der Korrektureinheit 8 und den Korrekturinformationen verhindert das Auftreten der genannten Lücken 12 im späteren Druckprozess.

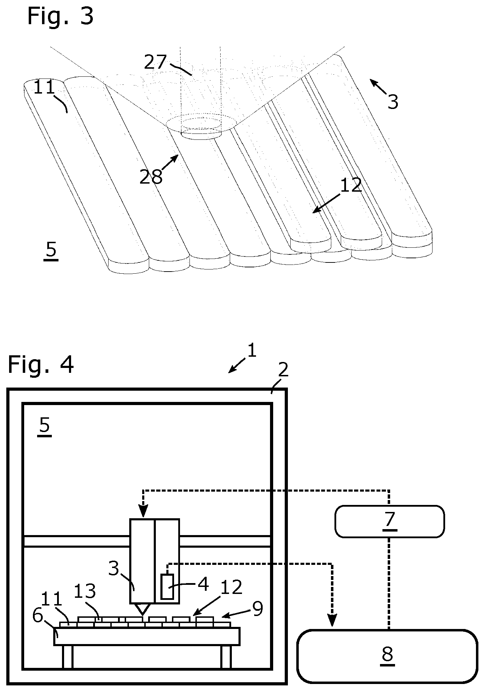

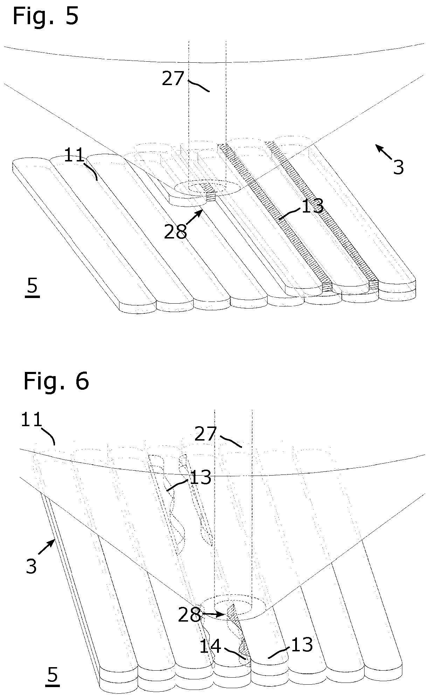

Treten, wie in Fig. 3, Fig. 4 und Fig. 5 gezeigt durch Kalibrierungsfehler Lücken oder Spalten 12 auf, können diese im Nachhinein aufgefüllt werden. Dazu wird auf Basis der Ist-Geometrie-Informationen ein Volumen zwischen den Schmelzsträngen 11 berechnet. Der Druckkopf 3 fährt die entsprechenden Fehlstellen an und legt eine Korrekturschmelze 13, auf Basis eines Korrekturvolumens, mit dem zuvor berechneten Massestrom ab. Die Breite der Spalten 12 kann kleiner als der Durchmesser der Düsenöffnung 28 sein, da, wie in Fig. 5 und Fig. 6 dargestellt, die zuvor abgelegten Schmelzstränge 11 beim Füllen der Fehlstellen als Abdichtung der Düsenöffnung 28 fungieren können.

Nach dem gleichen Prinzip können auch abgelegte Schmelzstränge 11 korrigiert werden, bei denen der Massestrom durch den Druckkopf 3 inhomogen war und somit inhomogen breite Lücken 13 senkrecht zu einer Druckrichtung - in der Druck- bzw. Schmelzstrangebene - aufweisen. Eine schematische Darstellung dazu ist in Fig. 6 zu sehen. Ein Schmelzstrang 14 weist hier laterale Inhomogenitäten auf. Das Volumen der inhomogen breiten Lücken 13 wird auf Basis der Ist-Geometrie-Informationen berechnet. Für diese Art der Korrektur wird somit ein nicht konstanter Korrekturmassestrom der Schmelze 27, mit einem korrespondierenden Korrekturvolumen, benötigt. Der Korrekturmassestrom der Schmelze 27 kann durch eine nicht konstante Fördergeschwindigkeit aus Materialbunkern 22 (was in einem nicht konstanten Massestrom durch den Druckkopf 3 resultiert) und/oder eine nicht konstante Verfahrgeschwindigkeit des Druckkopfes 3 relativ zum zu druckenden Bauteil 9 erzielt werden.

Zudem ist in einigen Ausführungsformen die Korrektureinheit 8 eingerichtet anhand eines Vergleiches der Ist- und Soll-Geometrie und/oder eines Vergleiches zu mindestens zwei verschiedenen Zeitpunkten Informationen über eine Materialschrumpfung nach dem Abkühlen der Schmelze, insbesondere der Schmelzstränge, zu bestimmen. Die Informationen über die Materialschrumpfung werden auf Basis der vom optischen Sensor 4 erfassten Ist-Geometrie bestimmt. In einigen Ausführungsformen wird dazu eine Testgeometrie gedruckt und die Ist-Geometrie im aufgeheizten und abgekühlten Zustand bestimmt. Dadurch kann der Schrumpfungskoeffizient berechnet werden. Die Korrekturinformation, umfassend die Informationen über die Materialschrumpfung, werden an die Steuereinheit 7 ausgegeben, sodass die Steuereinheit 7 die Position des Druckkopfes 3 relativ zu dem zu druckenden Bauteil 9 und/oder den Massestrom durch den Druckkopf 3 auf Basis der Korrekturinformation - einschließlich der Informationen über die Materialschrumpfung - steuert. Auf diese Weise werden im späteren Druckprozess Abweichungen zwischen der Ist- und Soll-Geometrie, sofern diese auf eine unerwünschte Materialschrumpfung zurückgehen, vermieden.

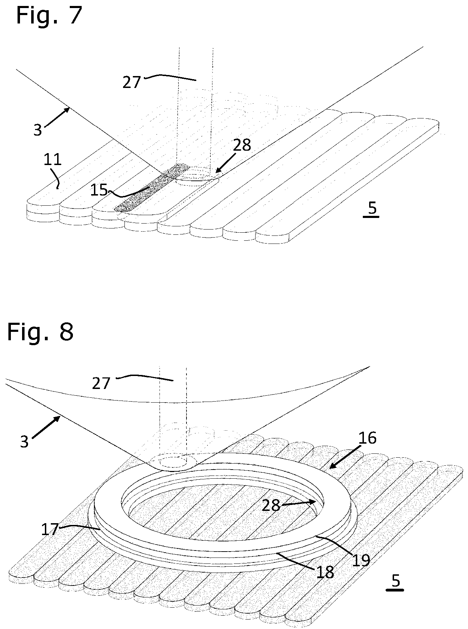

In Fig. 7 ist ein Druckprozess mit kurzzeitig erhöhtem Massestrom der Schmelze dargestellt. Die Breite des abgelegten Schmelzstranges überschreitet den Durchmesser der Düsenöffnung 28. Dadurch kommt es zu einer Fehlstelle 15, d.h. in diesem Fall zu einem Materialvolumen, wo dieses nicht erwünscht ist. Dieser Fehler kann durch eine auf Basis des optischen Sensors 4 und der Korrektureinheit 8 für den weiteren Verlauf des abgelegten Schmelzstranges und für weitere abgelegte Schmelzstränge verhindert und/oder im weiteren Druckprozess korrigiert werden. Eine Korrektur ist insofern möglich, wenn in der nachfolgenden aufgetragenen Schicht die Steuereinheit 7 die Position des Druckkopfes 3 relativ zu dem zu druckenden Bauteil 9 und/oder den Massestrom durch den Druckkopf 3 auf Basis der Korrekturinformation derart anpasst. Hierbei kann die Fehlstelle 15 in einem späteren Schritts im aktuellen Druckprozess dadurch ausgeglichen werden, dass in der nachfolgenden Schicht im Bereich über der Fehlstelle 15 weniger Material abgelegt wird, so dass die Ist-Geometrie anschließend wieder der Soll-Geometrie entspricht.

In Fig. 8 ist eine Formabweichung von der Soll-Geometrie zu erkennen. Hier ist beispielsweise als Soll-Geometrie ein Kreisring 16 gewählt. Formabweichungen können nicht nur Kreise, sondern alle Geometrieformen betreffen. In Fig. 8 ist die Ursache für die Formabweichung ein erhöhter Massestrom durch den Druckkopf 3. Dadurch erhöht sich eine Breite des Schmelzstranges in einer untersten abgelegten kreisförmigen Schicht, wodurch sich ein Innendurchmesser des Kreisringes 16 in einem unteren Bereich verringert und ein Außendurchmesser des Kreisringes 16 erhöht. Eine Korrektur ist möglich, wenn in den nachfolgenden aufgetragenen Schichten 18 und 19 die Steuereinheit 7 die Position des Druckkopfes 3 relativ zu dem zu druckenden Bauteil und/oder den Massestrom durch den Druckkopf auf Basis der Korrekturinformation derart anpasst, dass der Innen- und Außendurchmesser des Kreisringes 16 im späteren Druckprozess korrigiert wird.

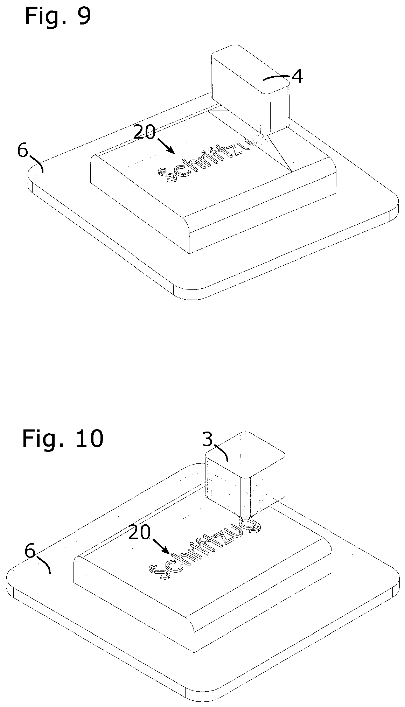

Bei herkömmlich gefertigten Bauteilen wie etwa Reifen kommt es häufig zu Fehlern auf einer Bauteiloberfläche (Fig.9, Fig. 10). Kommt z.B. ein Schriftzug 20 nicht optimal zur Geltung, so ist das Bauteil zwar in der Regel nicht in seiner Funktion eingeschränkt, jedoch trotzdem vom Verkauf ausgeschlossen. Durch eine Rasterung mit dem optischen Sensor 4 des Bauteils, was in Fig. 9 illustriert ist, kann auf Basis der Korrektureinheit 8, insbesondere durch eine Komplementberechnung, ein Oberflächenfehler durch einen additiven Auftrag der Schmelze korrigiert werden, gezeigt in Fig. 10. Der 3D-Drucker, der hierbei zum Einsatz kommt, kann in sämtlichen Merkmalen dem oben und/oder unten beschriebenen 3D-Drucker entsprechen.

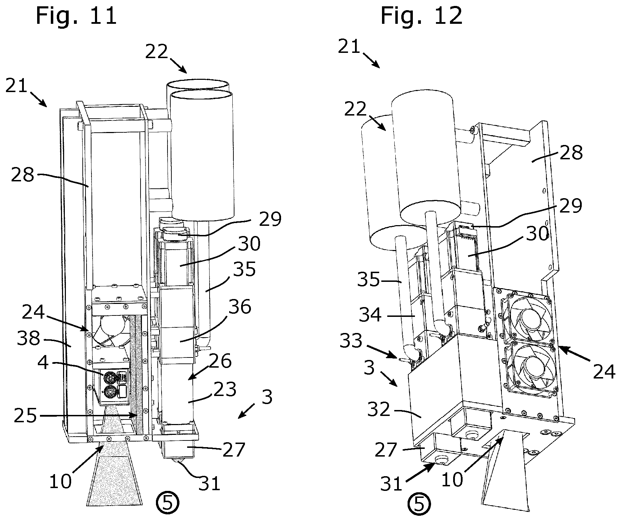

In Fign. 11 und 12 ist eine Ausführungsform einer Baugruppe 21 des oben beschriebenen 3D-Druckers, die den Druckkopf 3 und den optischen Sensor 4 umfasst, dargestellt. In einigen Ausführungsformen ist die Baugruppe 21 mit einem Schlitten einer X-Achse verschraubt und wird über ein XY-Flächenportal zweidimensional verfahren. Sie verfügt über zwei Extrusionseinheiten. Zwei Materialbunker 22 beinhalten ein Haupt- und Stützmaterial in einer Granulatform. Ein Material der verwendeten Schmelze ist in der Regel ein Kunststoff, insbesondere thermoplastischer Kunststoff, beispielsweise ABS, PLA, PEEK oder Nylon.

Ein Dämmmaterial kapselt die abstrahlende Wärme der Heizmanschetten 23. In einer separierten Kammer mit Lüftung 24 befindet sich der als Linienprofilsensor ausgeführte optische Sensor 4. Dieser ist freistehend gelagert, und ein permanenter Luftstrom kühlt den Linienprofilsensor 4. Der Sensor ist durch die Glasscheibe 10 vom Bauraum 5 getrennt 10. Dämmmaterial 25 schützt den Sensor vor abstrahlender Wärme von den Heizungsmanschetten 26 der Extrusionseinheiten. Weiterhin zeigen Fign. 11 und 12, einen Düseneinschraubblock 27, einen T-Träger 28, einen Encoder 29, einen Schrittmotor 30, eine Düse 31, einen Dämmkörper 32, einen Anschluss für eine Wasserkühlung 33, einen Kupplungsblock 34, ein Granulat-Zuführungsrohr 35, einen Granulat-Zuführungsblock 36 und eine Versteifungsrippe 38.

## Patentansprüche

1. 3D-Drucker (1), aufweisend einen Druckkopf (3) und eine Steuereinheit (7), die eingerichtet ist, eine Position des Druckkopfes (3) relativ zu einem zu druckenden Bauteil (9) und/oder einen Massestrom durch den Druckkopf (3) einzustellen,
einen optischen Sensor (4), der eingerichtet ist eine Ist-Geometrie des zu druckenden Bauteiles (9) zu bestimmen, und eine Korrektureinheit (8), wobei die Korrektureinheit (8) eingerichtet ist, die Ist-Geometrie zu empfangen, die Ist-Geometrie zum Bestimmen einer Korrekturinformation mit einer Soll-Geometrie zu vergleichen und die Korrekturinformation so an die Steuereinheit (7) auszugeben, dass die Steuereinheit (7) die Position des Druckkopfes (3) relativ zu dem zu druckenden Bauteil (9) und/oder den Massestrom durch den Druckkopf (3) auf Basis der Korrekturinformation steuert,
wobei der optische Sensor (4) von einem Bauraum (5), der zur Aufnahme des zu druckenden Bauteils (9) vorgesehen ist, durch eine optisch transparente Scheibe (10) getrennt ist, **dadurch gekennzeichnet, dass**
die Korrektureinheit (8) bei der Bestimmung der Korrekturinformation einen Brechungsindex der optisch transparenten Scheibe (10) berücksichtigt.

2. 3D-Drucker (1) nach Anspruch 1, **dadurch gekennzeichnet, dass** der optische Sensor (4) und der Druckkopf (3) derart miteinander verbunden sind, dass der optische Sensor (4) eine Bewegung entsprechend derjenigen des Druckkopfes (3) ausführt.

3. 3D-Drucker (1) nach einem der Ansprüche 1 oder 2, **dadurch kennzeichnet, dass** die Korrektureinheit (8) eingerichtet ist, während einer Herstellung des Bauteils (9) selbsttätig mehrfach weitere Korrekturinformationen zu bestimmen und so an die Steuereinheit (7) auszugeben, dass die Steuereinheit (7) die Position des Druckkopfes (3) relativ zu dem zu druckenden Bauteil (9) und/oder den Massestrom durch den Druckkopf (3) auf Basis der weiteren Korrekturinformationen steuert.

4. 3D-Drucker (1) nach einem der Ansprüche 1 bis 3, **dadurch gekennzeichnet, dass** der optische Sensor (4) ein Lasersensor ist.

5. 3D-Drucker (1) nach einem der Ansprüche 1 bis 3, **dadurch gekennzeichnet, dass** der optische Sensor (4) ein Leuchtdiodensensor ist.

6. 3D-Drucker (1) nach einem der Ansprüche 1 bis 5, **dadurch gekennzeichnet, dass** der optische Sensor (4) ein Linienprofilsensor ist.

7. 3D-Drucker (1) nach einem der Ansprüche 1 bis 6, **dadurch gekennzeichnet, dass** der 3D-Drucker (1) eingerichtet ist einen Schmelzschichtungsdruckprozess durchzuführen.

8. 3D-Drucker (1) nach einem der Ansprüche 1 bis 7, **dadurch gekennzeichnet, dass** die Korrektureinheit (8) eingerichtet ist anhand des Vergleichs der Ist-Geometrie mit der Soll-Geometrie einen Kalibrationsfehler zu erkennen und bei der Bestimmung der Korrekturinformation zu berücksichtigen, wobei die Korrektureinheit (8) eingerichtet ist die Korrekturinformation an die Steuereinheit (7) so auszugeben, dass die Steuereinheit (7) die Position des Druckkopfes (3) relativ zu dem zu druckenden Bauteil (9) und/oder den Massestrom durch den Drucckopf (3) auf Basis der Korrekturinformation derart anpasst, dass der Kalibrationsfehler in einem späteren Schritt in einem aktuellen Druckprozess vermieden wird.

9. 3D-Drucker (1) nach einem der Ansprüche 1 bis 8, **dadurch gekennzeichnet, dass** die Korrekturinformationen Informationen zu Korrekturvolumina enthalten, um Abweichungen zwischen der Soll- und Ist-Geometrie abhängig von den Korrekturvolumina durch Ablegen einer Korrekturschmelze zu beheben.

10. 3D-Drucker (1) nach Anspruch 9, **dadurch gekennzeichnet, dass** beim Beheben der Abweichungen zwischen der Soll- und Ist-Geometrie zuvor abgelegte Schmelzstränge als Abdichtung einer Düsenöffnung (28) fungieren.

11. 3D-Drucker (1) nach einem der Ansprüche 9 oder 10, **dadurch gekennzeichnet, dass** die Abweichungen derart behoben werden, dass Lücken (13) mit inhomogener Breite in Richtung senkrecht zu einer Druckrichtung mit der Korrekturschmelze gefüllt werden, indem die Steuereinheit (7) die Position des Druckkopfes (3) relativ zu dem zu druckenden Bauteil (9) und/oder den Massestrom durch den Druckkopf (3) abhängig von der Breite steuert.

12. 3D-Drucker (1) nach einem der Ansprüche 1 bis 11, **dadurch gekennzeichnet, dass** die Korrektureinheit (8) eingerichtet ist anhand eines Vergleiches der Ist- und Soll-Geometrie und/oder eines Vergleiches der Ist-Geometrie zu mindestens zwei verschiedenen Zeitpunkten Informationen über eine Materialschrumpfung nach dem Abkühlen der Schmelze zu bestimmen, wobei die Korrekturinformation die Informationen über die Materialschrumpfung enthalten und so an die Steuereinheit (7) ausgegeben werden, dass die Steuereinheit (7) die Position des Druckkopfes (3) relativ zu dem zu druckenden Bauteil (9) und/oder den Massestrom durch den Druckkopf (3) auf Basis der Korrekturinformation steuert.

13. Verfahren zum 3D-Drucken umfassend folgende Schritte:
- Bestimmen einer Ist-Geometrie eines zu druckenden Bauteiles (9),
- Bestimmen einer Korrekturinformation auf Basis eines Vergleiches der Ist-Geometrie mit einer Soll-Geometrie des zu druckenden Bauteiles (9), wobei für den Vergleich beispielsweise ein, insbesondere auf einer Slicer-Software basierender, G-Code verwendet wird, und
- Positionieren eines Druckkopfes (3) relativ zu dem zu druckenden Bauteil (9) und/oder Steuerung eines Massestromes durch den Drucckopf (3) auf Basis der Korrekturinformation,
wobei ein optische Sensor (4) zur Bestimmung der Ist-Geometrie von einem Bauraum (5), der zur Aufnahme des zu druckenden Bauteils (9) vorgesehen ist, durch eine optisch transparente Scheibe (10) getrennt ist, **dadurch gekennzeichnet, dass** beim Bestimmen der Korrekturinformation ein Brechungsindex der optisch transparenten Scheibe berücksichtigt wird.

## Claims

1. A 3D printer (1), comprising a print head (3) and a control unit (7) which is configured to adjust a position of the print head (3) relative to a component (9) to be printed and/or a mass flow through the print head (3);
an optical sensor (4), which is configured to determine an actual geometry of the component (9) to be printed, and a correcting unit (8), the correcting unit (8) being configured to receive the actual geometry, to compare the actual geometry to a target geometry for determining a correction information, and to output the correction information to the control unit (7) in such a way that the control unit (7) controls the position of the print head (3) relative to the component (9) to be printed and/or the mass flow through the print head (3) based on the correction information,
wherein
the optical sensor (4) is separated from an installation space (5), which is provided to receive the component (9) to be printed, by an optically transparent pane (10),
**characterized in that**
the correcting unit (8) takes a refractive index of the optically transparent pane (10) into consideration during the determination of the correction information.

2. The 3D printer (1) according to claim 1, **characterized in that** the optical sensor (4) and the print head (3) are connected to one another in such a way that the optical sensor (4) carries out a movement corresponding to that of the print head (3).

3. The 3D printer (1) according to either claim 1 or 2, **characterized in that** the correcting unit (8) is configured to automatically determine further correction information multiple times during a production of the component (9) and to output the further correction information to the control unit (7) in such a way that the control unit (7) controls the position of the print head (3) relative to the component (9) to be printed and/or the mass flow through the print head (3) based on the further correction information.

4. The 3D printer (1) according to any one of claims 1 to 3, **characterized in that** the optical sensor (4) is a laser sensor.

5. The 3D printer (1) according to any one of claims 1 to 3, **characterized in that** the optical sensor (4) is a light-emitting diode sensor.

6. The 3D printer (1) according to any one of claims 1 to 5, **characterized in that** the optical sensor (4) is a line profile sensor.

7. The 3D printer (1) according to any one of claims 1 to 6, **characterized in that** the 3D printer (1) is configured to carry out a fused deposition modeling printing process.

8. The 3D printer (1) according to any one of claims 1 to 7, **characterized in that** the correcting unit (8) is configured to recognize a calibration error, based on the comparison between the actual geometry and the target geometry, and to take the calibration error into consideration during the determination of the correction information, the correcting unit (8) being configured to output the correction information to the control unit (7) in such a way that the control unit (7) adapts the position of the print head (3) relative to the component (9) to be printed and/or the mass flow through the print head (3) based on the correction information in such a way that the calibration error is avoided in a later step during a current printing process.

9. The 3D printer (1) according to any one of claims 1 to 8, **characterized in that** the correction information contain information regarding correction volumes so as to rectify deviations between the target and actual geometries as a function of the correction volumes by depositing a correction melt.

10. The 3D printer (1) according to claim 9, **characterized in that** previously deposited melt strands act as a seal of a nozzle opening (28) during the rectification of the deviations between the target and actual geometries.

11. The 3D printer (1) according to either claim 9 or 10, **characterized in that** the deviations are rectified in such a way that gaps (13) having an inhomogeneous width in a direction perpendicular to a printing direction are filled with the correction melt by the control unit (7) controlling the position of the print head (3) relative to the component (9) to be printed and/or the mass flow through the print head (3) as a function of the width.

12. The 3D printer (1) according to any one of claims 1 to 11, **characterized in that** the correcting unit (8) is configured to determine information regarding material shrinkage after the melt has cooled based on a comparison between the actual and target geometries and/or a comparison of the actual geometry at at least two different points in time, the correction information containing the information regarding the material shrinkage and being output to the control unit (7) in such a way that the control unit (7) controls the position of the print head (3) relative to the component (9) to be printed and/or the mass flow through the print head (3) based on the correction information.

13. A method for 3D printing, comprising the following steps:
- determining an actual geometry of a component (9) to be printed;
- determining a correction information based on a comparison between the actual geometry and a target geometry of the component (9) to be printed, wherein for example a G-code, in particular a G-code based on slicer software, is used for the comparison; and
- positioning a print head (3) relative to the component (9) to be printed and/or controlling a mass flow through the print head (3) based on the correction information,
wherein
an optical sensor (4) for determining the actual geometry is separated from an installation space (5), which is provided to receive the component (9) to be printed, by an optically transparent pane (10), **characterized in that** a refractive index of the optically transparent pane is taken into consideration during the determination of the correction information.

## Revendications

1. Imprimante 3D (1), comprenant une tête d'impression (3) et une unité de commande (7) configurée pour ajuster une position de la tête d'impression (3) par rapport à un composant (9) à imprimer et/ou un débit massique à travers la tête d'impression (3),
un capteur optique (4) configuré pour déterminer une géométrie réelle du composant (9) à imprimer, et une unité de correction (8), l'unité de correction (8) étant configurée pour recevoir la géométrie réelle, pour comparer la géométrie réelle à une géométrie cible afin de déterminer des informations de correction, et pour transmettre les informations de correction à l'unité de commande (7) de sorte que l'unité de commande (7) commande la position de la tête d'impression (3) par rapport au composant (9) à imprimer et/ou le débit massique à travers la tête d'impression (3) en se basant sur les informations de correction,
dans laquelle
le capteur optique (4) est séparé, par une vitre optiquement transparente (10), d'un espace de production (5) prévu pour accueillir le composant (9) à imprimer,
**caractérisée en ce que**
l'unité de correction (8) prend en compte un indice de réfraction de la vitre optiquement transparente (10) lors de la détermination des informations de correction.

2. Imprimante 3D (1) selon la revendication 1, **caractérisée en ce que** le capteur optique (4) et la tête d'impression (3) sont reliés l'un à l'autre de telle manière que le capteur optique (4) exécute un mouvement correspondant à celui de la tête d'impression (3).

3. Imprimante 3D (1) selon l'une quelconque des revendications 1 ou 2, **caractérisée en ce que** l'unité de correction (8) est configurée pour déterminer automatiquement plusieurs fois d'autres informations de correction pendant la production du composant (9) et pour les transmettre à l'unité de commande (7) de sorte que l'unité de commande (7) commande la position de la tête d'impression (3) par rapport au composant (9) à imprimer et/ou le débit massique à travers la tête d'impression (3) en se basant sur les autres informations de correction.

4. Imprimante 3D (1) selon l'une quelconque des revendications 1 à 3, **caractérisée en ce que** le capteur optique (4) est un capteur laser.

5. Imprimante 3D (1) selon l'une quelconque des revendications 1 à 3, **caractérisée en ce que** le capteur optique (4) est un capteur à diode électroluminescente.

6. Imprimante 3D (1) selon l'une quelconque des revendications 1 à 5, **caractérisée en ce que** le capteur optique (4) est un capteur linéaire.

7. Imprimante 3D (1) selon l'une quelconque des revendications 1 à 6, **caractérisée en ce que** l'imprimante 3D (1) est configurée pour mettre en œuvre un procédé d'impression par dépôt de fil fondu.

8. Imprimante 3D (1) selon l'une quelconque des revendications 1 à 7, **caractérisée en ce que** l'unité de correction (8) est configurée pour détecter une erreur d'étalonnage à l'aide de la comparaison entre la géométrie réelle et la géométrie cible et pour la prendre en compte lors de la détermination des informations de correction, l'unité de correction (8) étant configurée pour transmettre les informations de correction à l'unité de commande (7) de sorte que l'unité de commande (7) adapte la position de la tête d'impression (3) par rapport au composant (9) à imprimer et/ou le débit massique à travers la tête d'impression (3) en se basant sur les informations de correction de telle manière que l'erreur d'étalonnage est évitée dans une étape ultérieure d'un processus d'impression en cours.

9. Imprimante 3D (1) selon l'une quelconque des revendications 1 à 8, **caractérisée en ce que** les informations de correction contiennent des informations sur des volumes de correction afin de rectifier des écarts entre la géométrie cible et la géométrie réelle en fonction des volumes de correction par dépôt d'une masse fondue de correction.

10. Imprimante 3D (1) selon la revendication 9, **caractérisée en ce que**, lors de la rectification des écarts entre la géométrie cible et la géométrie réelle, des cordons de masse fondue préalablement déposés font office de dispositif d'étanchéité pour un orifice de buse (28).

11. Imprimante 3D (1) selon l'une quelconque des revendications 9 ou 10, **caractérisée en ce que** les écarts sont rectifiés de telle manière que des espaces (13) de largeur non-homogène dans une direction perpendiculaire à une direction d'impression sont remplis avec la masse fondue de correction, l'unité de commande (7) commandant la position de la tête d'impression (3) par rapport au composant (9) à imprimer et/ou le débit massique à travers la tête d'impression (3) en fonction de la largeur.

12. Imprimante 3D (1) selon l'une quelconque des revendications 1 à 11, **caractérisée en ce que** l'unité de correction (8) est configurée pour déterminer des informations sur un retrait de matériau après le refroidissement de la masse fondue à l'aide d'une comparaison entre la géométrie réelle et la géométrie cible et/ou d'une comparaison entre les géométries réelles à au moins deux instants différents, les informations de correction contenant les informations sur le retrait de matériau et étant transmises à l'unité de commande (7) de sorte que l'unité de commande (7) commande la position de la tête d'impression (3) par rapport au composant (9) à imprimer et/ou le débit massique à travers la tête d'impression (3) en se basant sur les informations de correction.

13. Procédé d'impression 3D comprenant les étapes ci-dessous consistant à :
- déterminer une géométrie réelle d'un composant (9) à imprimer,
- déterminer des informations de correction en se basant sur une comparaison entre la géométrie réelle et une géométrie cible du composant (9) à imprimer, un G-code, en particulier basé sur un logiciel de découpage, étant par exemple utilisé pour la comparaison, et
- positionner une tête d'impression (3) par rapport au composant (9) à imprimer et/ou commander un débit massique à travers la tête d'impression (3) en se basant sur les informations de correction,
dans laquelle
un capteur optique (4) pour déterminer la géométrie réelle est séparé, par une vitre optiquement transparente (10), d'un espace de production (5) prévu pour accueillir le composant (9) à imprimer, **caractérisé en ce qu'**un indice de réfraction de la vitre optiquement transparente est pris en compte lors de la détermination des informations de correction.
